Europäisches Patentamt

(19) European Patent Office

Office européen des brevets

(11) Publication number: **0 062 020**

**B1**

(12) **EUROPEAN PATENT SPECIFICATION**

(45) Date of publication of patent specification: **10.04.85**

(21) Application number: **82850061.1**

(22) Date of filing: **24.03.82**

(51) Int. Cl.⁴: **B 60 P 7/13**

(54) Locking arrangement for a supporting frame for load carriers.

(30) Priority: **27.03.81 SE 8101991**

(43) Date of publication of application:
**06.10.82 Bulletin 82/40**

(45) Publication of the grant of the patent:
**10.04.85 Bulletin 85/15**

(84) Designated Contracting States:
**AT BE DE FR GB**

(56) References cited:
**DE-A-3 024 190**
**US-A-3 158 106**
**US-A-3 259 400**
**US-A-3 742 867**

(73) Proprietor: **VOLVO BM AB BRAASVERKEN**
**S-360 42 Braäs (SE)**

(72) Inventor: **Carlsson, Ingemar**
**Antons väg 2**
**S-352 44 Växjö (SE)**
Inventor: **Johansson, Arne**
**Hasselvägen 39**
**S-360 42 Braas (SE)**

(74) Representative: **Nordén, Ake et al**
**AWAPATENT AB Box 7402**
**S-103 91 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a locking arrangement for a supporting frame for load carriers and load containers, which load carrier or load container is provided along the edges of its underside with downwardly extending runner-like projections adapted to define between themselves an elongate space adapted to receive the supporting frame, including locking means provided on two opposite sides of the supporting frame and pivotable by turning means about longitudinal shafts, said locking means being adapted to be displaced into engagement with abutment sections in the load carrier or load container in order to lock together the frame and said load carrier or load container the locking means in the supporting frame consisting of two substantially radially extending locking heads arranged on two spaced apart shafts (US—A—3 158 106).

In the transportation of goods it is already known to use comparatively simple containers or platform-like load carriers which, when they are to be loaded on and unloaded from vehicles, are handled by means of a frame which is inserted under the container or carrier and is locked to it. Hitherto used locking devices of this type have been circumstantial to handle and have required accurate positioning of the frame relative to the container or carrier. Wrong relative positioning has perhaps not always been observed until the lift has started and this has resulted in damages. From US—A—3 259 400 a supporting frame is known, having retractable locking pins adapted to be displaced into engagement with corresponding apertures in the lower container edges. Exact longitudinal positioning of the container is necessary.

The object of this invention is to provide an arrangement which permits simple and efficient locking together of container and frame and eliminates the need of exact longitudinal positioning.

Another object of the invention is to provide a locking arrangement constructed so as to permit depositing and collecting load containers or other load carriers in any angle of inclination from horizontal to vertical position.

The essential characteristic of the arrangement according to the invention is that the load carrier or container is provided along each of the downwardly extending runner-like projections with abutment sections constituting longitudinal groove-shaped recesses facing in opposite lateral directions and being crossed at least at one point by an inwardly tapering bar, and that the locking heads carried by the shafts are adapted, when the respective shaft turns from inactive position, to be displaced towards a locking position, while, by engagement with the wall downwardly defining the respective longitudinal recess, the frame is brought to approach the load carrier and the frame and the load carrier or container are brought to be fixed relative to each other.

An embodiment of the arrangement according to the invention will be described more fully below with reference to the accompanying drawings, in which:

Fig. 1 is an end view of a container adapted to the purpose;

Fig. 2 is an end view of a frame adapted to receive one long container or several short containers of this type;

Fig. 3 is a side view of the same frame;

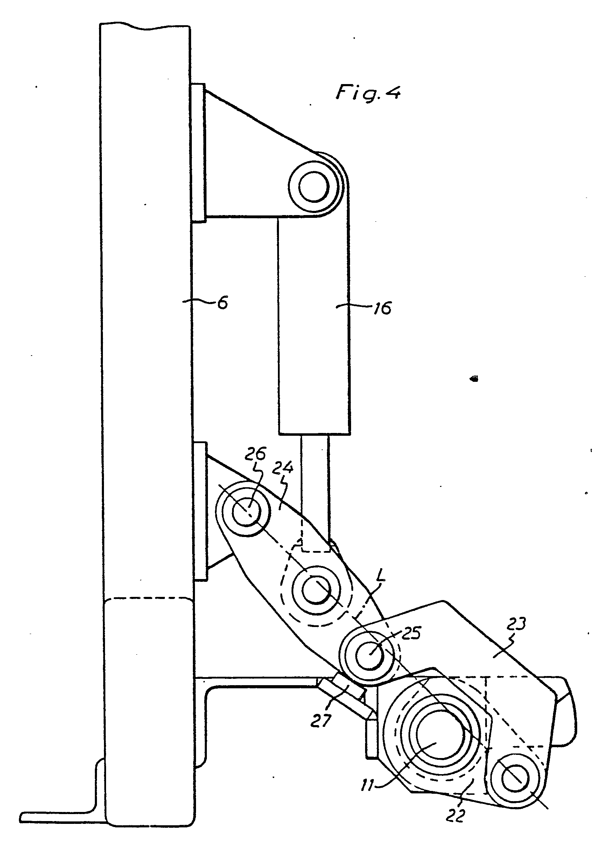

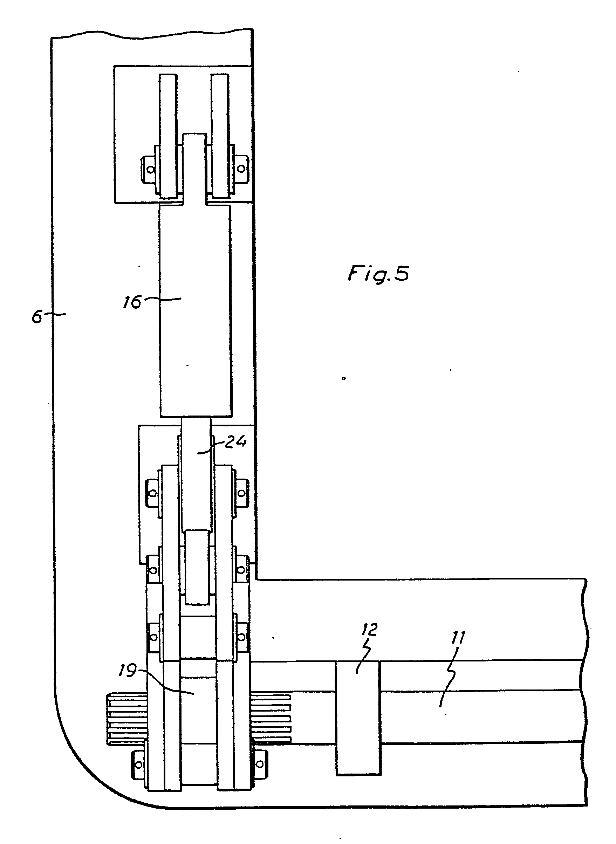

Figs. 4 and 5 represent sections from Figs. 2 and 3 on a larger scale;

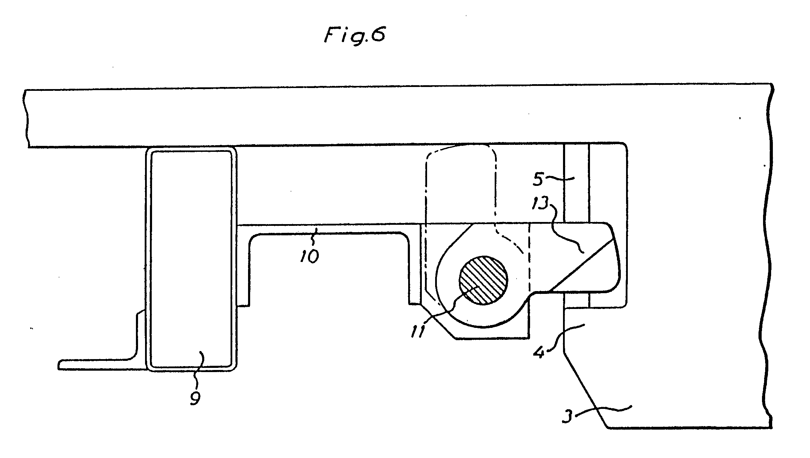

Fig. 6 is a cross-sectional view on a larger scale of one of the beams of the frame, the locking means and the cooperating portion of the container bottom;

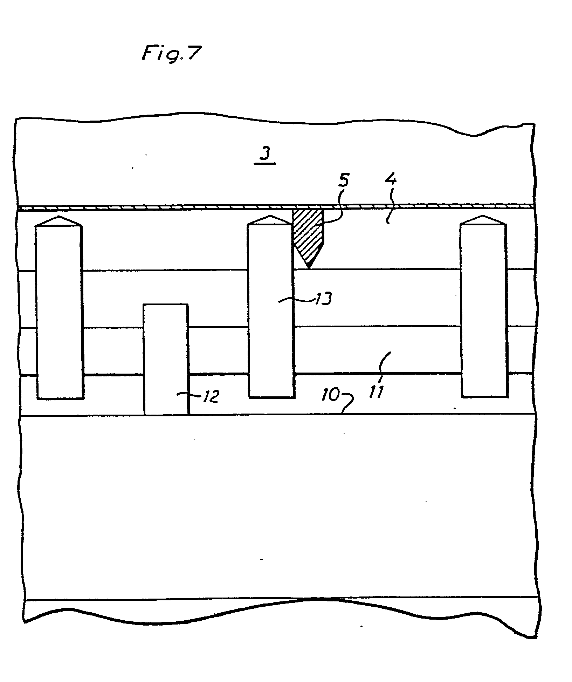

Fig. 7 shows a longitudinal section on a larger scale on line A—A in Fig. 6;

Fig. 8 is a sectional view of the rear portion of one beam in the handling frame; and

Fig. 9 illustrates how the operating frame can be used for vertical positioning of a load container by means of a per se known load handling device.

The load carrier 1, which may consist of an open or closed container, a load platform, a large pallet or the like, is provided along the bottom 2 with two longitudinal runner-like projections 3 which may consist of externally provided profiles or form parts of the bottom. Either projection 3 is provided with an inwardly extending flange 4 which defines a recess or groove which is open inwardly towards the space between the runner-like projections, and at least one but as a rule several separate bars 5 with inwardly directed sharp edges extend across said recess.

The handling frame 6 consists of a column or end wall bracket 7 arranged at the front and provided with a grab loop 8, adapted to cooperate with a per se known load handling means provided with a hook, and beams 9 extending backwards from the end wall bracket 7 and adapted to engage the bottom of the container 1 and constitute a support therefor. Bearings 12 for shafts 11 are arranged by means of profiles 10 on the outside of these beams 9. The shafts 11 are provided with a number of separate locking heads 13 projecting substantially tangentially. Each of the shafts 11 is divided into two sections 11a and 11b which are non-rotatably connected to each other via a coupling sleeve 14. Arranged at the front end of each shaft 11 is a turning means 15 in the form of a link system which is actuable by means of a pressure-medium driven cylinder-piston assembly 16 or other appropriate jack assembly. The front section 11a of the shaft is axially movable relative to the link system. Thus, the back section 11b of the shaft can be axially displaced relative to the front shaft section 11a against the action of springs 17b and said front section can be displaced relative to the turning means against the action of springs 17a. The springs 17a and 17b maintain the shaft sections in a central position.

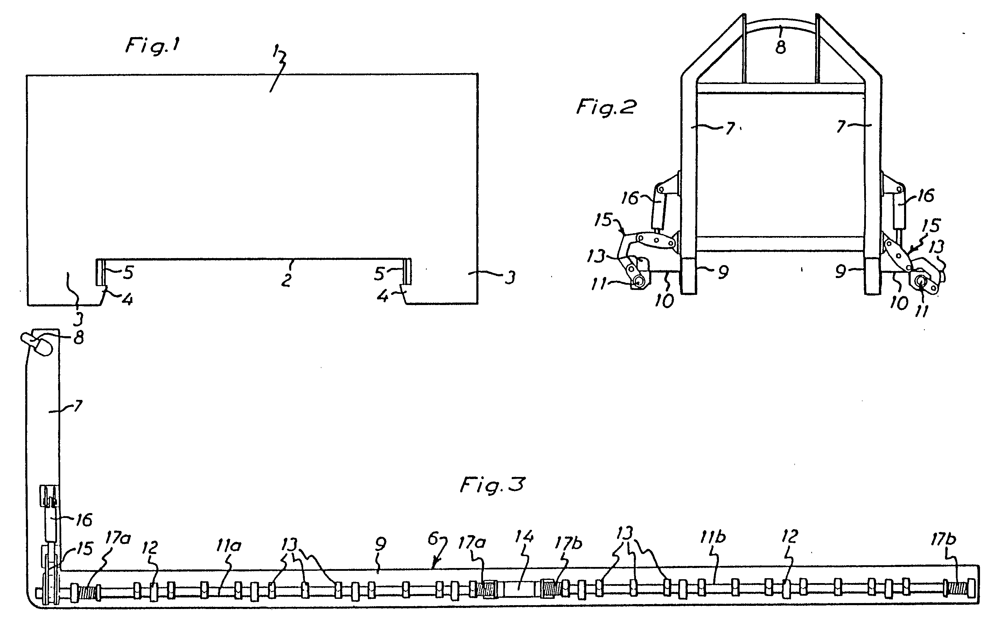

In the inactive position, shown to the left in Fig. 2, the shaft 11 is turned so that the heads 13 are directed towards the underside of the load carrier.

For the sake of simplicity the locking means to the right and the locking means to the left in Fig. 2 have been shown in different positions. It should be noticed, however, that when used the locking means in the two frame beams follow each other. In this position the frame 6 can freely be inserted into and removed from the space between the runner-like projections 3. When the frame has been inserted in the intended position under the container, pressure medium is supplied to the cylinder-piston assemblies 16 whereby the shafts 11 will turn. At this moment the heads 13 will engage the inwardly extending flange 4 and lock the load carrier to the frame. Should some head 13 come right opposite some of the bars 5 the edge of the bar will displace the shaft section forwards or backwards so far that the head 13 can run in beside the respective bar.

The displacement, rendered possible by the springs 17a and 17b, of the shaft sections 11a and 11b carrying the locking heads 13 is adjusted relative to the distance or pitch between the bars so as to permit a displacement substantially corresponding to one pitch. This ensures that it is possible to realize the intended engagement under any circumstances.

The length or radial extent of the locking heads 13 is adapted so that, when the shafts 11 turn, the heads 13 will engage the lower flanges 4 of the recesses also when the handling frame 6 is at some distance from the bottom 2 of the container or load carrier 1. During continued turning the handling frame will be drawn upwards towards the bottom of the load carrier so that the frame in end position will be held applied to the carrier.

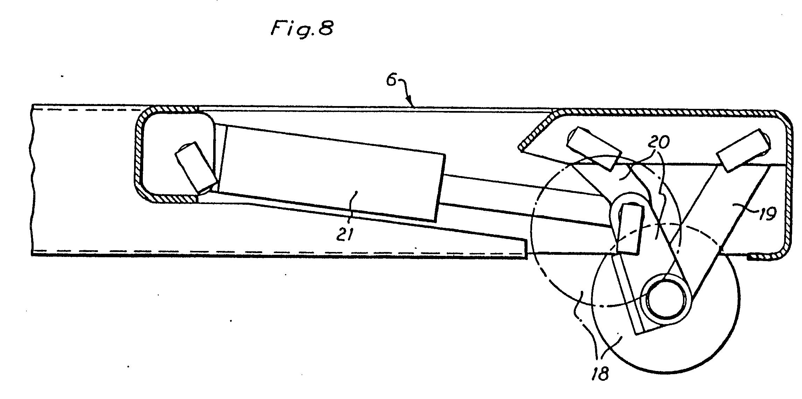

When a load container or load carrier 1 stands on the ground or some other plane foundation use is made of an operable roller 18, placed at the back between the frame shanks or beams 9, for primarily lifting of the load frame 6 towards the bottom 2. As is apparent from Fig. 8 the roller is connected with each of the beams 9 by means of a swing lever 19 and a link pair 20. The link pairs 20 are of self-locking toggle joint type and are actuated by a cylinder-piston assembly 21 provided in either beam and adapted to straighten out and to fold the link system.

In the retracted position, indicated by dashed lines, the roller 18 will function as a drive wheel for moving the frame in under and out from the load carrier or container. When the link pair 20 is straightened out and locked by the cylinder-piston assembly 21 the frame is elevated so that it will bear against the bottom of the load carrier and lift this slightly from the ground. After the frame and the load carrier have been locked up to each other, it will be possible, if required, to move the frame and the load carrier, which is supported at one end by the handling means of the vehicle, along the ground. Loading as well as unloading of the handling frame with the load carrier is of course facilitated by the fact that the ground engaging frame end can roll.

The arrangement according to the invention permits simple and efficient retention, vertically as well as longitudinally, with a minimum of manual work. A self-locking effect is obtained because a turning means 15, consisting of a lever 22 and a link pair 23 and 24, is used instead of using a simple lever directly connected to the cylinder-piston assembly. When the link pair 23 has been moved by means of the cylinder-piston assembly 16 to the position shown to the right in Fig. 2, the joint 25 between the two links 23 and 24 will be situated beyond a line L drawn through the bearing point 26 of the link 23 at the end wall bracket 6 and the joint of the link 24 at the lever 22 non-rotatably fitted on the shaft 11. The interconnected ends of the links 23 and 24 bear in this position against an abutment 27 provided on the profile 10, which causes the link pair to act as a rigid rod and prevents the shaft 11 from swinging back even if the cylinder-piston assembly 16 is made pressure-free. The locking can be released only by supplying counteracting pressure medium into the cylinder-piston assembly.

Pressure medium to the cylinder-piston assemblies 16 and 21 is suitably supplied via automatic couplings from the vehicle which is to load or unload the frame with the load carrier.

The locking device according to the present invention makes it possible to deliver or collect load containers or load carriers in any position between horizontal position and vertical position.

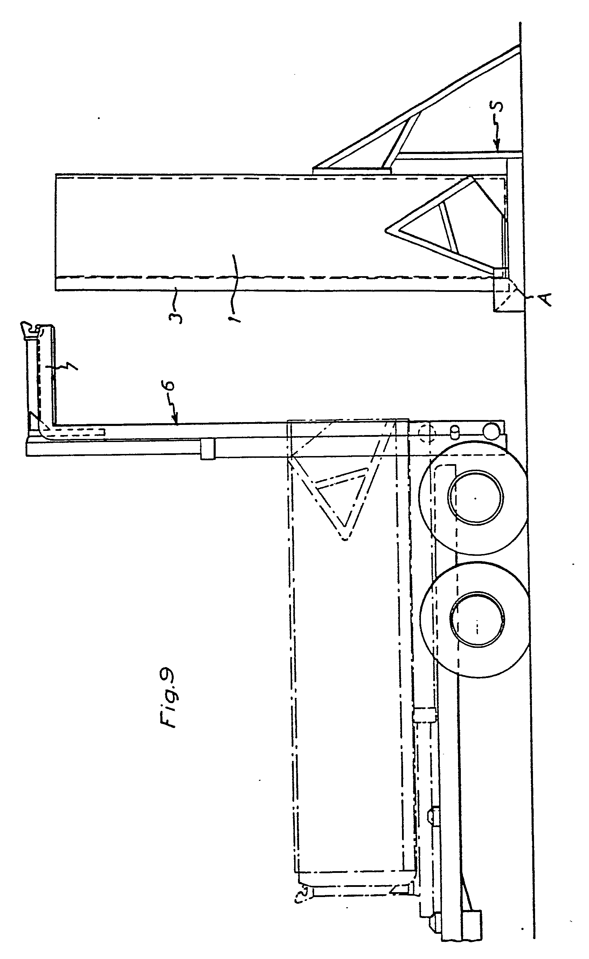

Fig. 9 shows how a load container can be placed in vertical position on a receiving stand S in that the vehicle with the handling means H in raised position carrying the frame and the load container is backed up to the stand. After the handling means has been lowered so that the container 1 rests against the stand the locking means is released, whereupon the vehicle with the handling frame 6 can drive away. Picking-up of containers takes place in the reverse order. The vehicle with the load handling means and the handling frame 6 carried thereby is backed up to the container whereupon the locking mechanism is actuated. The fact already mentioned that the locking heads 13 can draw the handling frame 6 up to the container bottom 2 makes it possible to overcome any minor deviations from the exact position.

In order to increase the stability in lifting and depositing particularly heavy containers the stand S illustrated in the drawing is provided with an abutment A about which the lower corner of the load container 1 can pivot. While the vehicle with the container loaded thereon is driven up to the stand the frame of the handling means H supporting the container can be kept in forwardly inclined position until the container has reached in over the stand and then be swung up for delivery. For the picking-up of a loaded container a similar procedure may be applied in the reverse order.

The construction of the handling means also permits delivery and collection of vertically positioned containers from levels above and below the level where the vehicle is situated.

The invention must not be considered limited to that described above and shown in the drawings but may be modified in various ways within the scope of the appended claims.

## Claims

1. A locking arrangement for a supporting frame for load carriers and load containers, which load carrier or load container (1) is provided along the edges of its underside with downwardly extending runner-like projections (3) adapted to define between themselves an elongate space adapted to receive the supporting frame, including locking means (13) provided on two opposite sides of the supporting frame (6) and pivotable by turning means (15) about longitudinal shafts (11), said locking means being adapted to be displaced into engagement with abutment sections in the load carrier or load container in order to lock together the frame and said load carrier or load container, the locking means in the supporting frame (6) consisting of two substantially radially extending locking heads (13) arranged on two spaced-apart shafts, characterized in that the load carrier or load container (1) is provided along each of the downwardly extending runner-like projections (3) with abutment sections constituting longitudinal groove-shaped recesses facing in opposite lateral directions and being crossed at least at one point by an inwardly tapered bar (5), and that the locking heads (13) carried by the shafts (11) are adapted, when the respective shaft turns from inactive position, to be displaced towards a locking position, while, by engagement downwardly with the flange (4) defining the respective longitudinal recess, the frame (6) is brought to approach the load carrier (1) and the frame and the load carrier or container are brought to be fixed relative each other.

2. A locking arrangement as claimed in claim 1, characterized in that the shafts (11) carrying the locking heads (13) are axially displaceable.

3. A locking arrangement as claimed in claim 1 or 2, characterized in that each shaft (11) is divided into at least two non-rotatably interconnected sections (11a and 11b) which are displaceable relative to each other and to the supporting frame.

4. A locking arrangement as claimed in claim 1, 2 or 3, characterized in that each shaft is adapted to turn by means of a pressure-medium actuated cylinder-piston assembly (16) via a link assembly (15) of self-locking type.

5. A locking arrangement as claimed in claim 1, characterized in that, in order to facilitate for the supporting frame (6) to come close up to the load carrier or the like (1), before contraction and locking take place, the supporting frame is provided at its rear part with at least one supporting roller (18) which is displaceable in upward and downward direction and is lockable in downwardly displaced position.

## Revendications

1. Arrangement de verrouillage destiné à un châssis de support d'organes de transport de charge et de conteneurs, l'organe de transport ou le conteneur (1) ayant, le long des bords de sa face inférieure, des saillies (3) dépassant vers le bas et analogues à des patins, ces saillies étant destinées à délimiter entre elles un espace allongé destiné à loger le châssis de support, comprenant un dispositif de verrouillage (13) placé sur deux côtés opposés du châssis (6) et destiné à pivoter sous la commande d'un dispositif d'entraînement en rotation (15) autour d'arbres longitudinaux (11), le dispositif de verrouillage étant destiné à être déplacé au contact de tronçons de butée formés dans l'organe de transport ou conteneur afin que le châssis et l'organe de transport ou conteneur soit verrouillé l'un sur l'autre, le dispositif de verrouillage disposé dans le châssis de support (6) étant constitué de deux têtes de verrouillage (13) disposées radialement et placées sur deux arbres distants, caractérisé en ce que l'organe de transport ou conteneur (1) est muni, le long de chacune des saillies (3) dirigées vers le bas et analogues à un patin, de tronçons de butées constituant des cavités longitudinales en forme de gorges, tournées latéralement en sens opposés et recoupées au moins en un point par une barre (5) s'inclinant vers l'intérieur, et en ce que les têtes de verrouillage (13) portées par les arbres (11) sont destinées à être déplacées vers une position de verrouillage lorsque l'arbre respectif tourne à partir d'une position de repos alors que le châssis (6) est approché de l'organe de transport (1), et le châssis et l'organe de transport ou conteneur sont fixés l'un par rapport à l'autre par coopération vers le bas avec le flasque (4) délimitant la cavité longitudinale respective.

2. Arrangement de verrouillage selon la revendication 1, caractérisé en ce que les arbres (11) portant les têtes de verrouillage (13) sont mobiles axialement.

3. Arrangement de verrouillage selon l'une des revendications 1 et 2, caractérisé en ce que chaque arbre (11) est divisé en au moins deux tronçons (11a et 11b) qui sont connectés afin qu'ils ne puissent pas tourner l'un par rapport à l'autre et qui sont mobiles l'un par rapport à l'autre et par rapport au châssis de support.

4. Arrangement de verrouillage selon l'une quelconque des revendications 1 à 3, caractérisé en ce que chaque arbre est destiné à tourner sous la commande d'un vérin (16) commandé par un fluide sous pression, par l'intermédiaire d'un ensemble à bielles (15) de type autobloquant.

5. Arrangement de verrouillage selon la revendication 1, caractérisé en ce que le châssis de support est muni, dans sa partie arrière, d'au moins un galet de support (18) mobile vers le bas et vers le haut et verrouillable en position décalée vers le bas afin que le rapprochement du châssis de support (6) de l'organe de transport de charge ou analogue (1) soit facilité avant contraction et verrouillage.

**Patentansprüche**

1. Verriegelungsvorrichtung für einen Lasttragrahmen für Lastträger und Lastbehälter, wobei der Lastträger bzw. Lastbehälter (1) entlang der Kanten seiner Unterseite nach unten hervorstehende kufenähnliche Vorsprünge (3) aufweist, die zwischen sich einen für die Aufnahme des Trägerrahmens vorgesehenen, länglichen Raum bilden, mit am Trägerrahmen (6) auf zwei gegenüberliegenden Seiten vorgesehenen, durch Drehorgane (15) um längsverlaufende Achsen (11) drehbaren Riegelorganen (13), die zur Verbindung von Tragerrahmen und Lastträger bzw. Lastbehälter in Eingriff mit Anschlagteilen am Lastträger bzw. Lastbehälter verschoben werden, wobei die Riegelorgane am Trägerrahmen (6) aus an zwei im gegenseitigen Abstand angeordneten Achsen angebrachten, sich hauptsächlich radial erstreckenden Riegelköpfen (13) bestehen, dadurch gekennzeichnet, daß der Lastträger bzw. Lastbehälter (1) jeweils entlang der nach unten hervorstehenden kufenähnlichen Vorsprünge (3) mit Gegenlager bildenden, in entgegengesetzten Seitenrichtungen gewendeten, rinnenähnlichen längsverlaufenden Ausnehmungen versehen ist, die an wenigstens einer Stelle von einem nach innen schmäler werdenden Steg (5) überquert werden, und daß die von den Achsen (11) getragenen Riegelköpfe (13) bei der Drehung der jeweiligen Achse von einer Ruhestellung in eine Verriegelungsstellung verschoben werden, wobei durch Eingriff mit der die jeweilige längsverlaufende Ausnehmung nach unten begrenzenden Wand (4) sowohl ein Annähern des Rahmens (6) an den Lastträger (1) als auch ein gegenseitiges Verriegeln von Rahmen und Lastträger bzw. -Behälter erfolgt.

2. Verriegelungsvorrichtung nach Patentanspruch 1, dadurch gekennzeichnet, daß die die Riegelköpfe (13) tragenden Achsen (11) axial verschiebbar sind.

3. Verriegelungsvorrichtung nach Anspruch 1 oder 2, dadurch gekennzeichnet, daß jede der Achsen (11) jeweils in wenigstens zwei gegenseitig und gegenüber dem Träger axial verschiebbare aber mit einander drehfest verbundene Teile (11a, 11b) aufgeteilt ist.

4. Verriegelungsvorrichtung nach Anspruch 1, 2 oder 3, dadurch gekennzeichnet, daß jede der Achsen (11) durch eine druckmittelbetätigte Zylinderkolbenvorrichtung (16) über einen Gelenkmechanismus (15) selbsthemmender Art drehbar ist.

5. Verriegelungsvorrichtung nach Patentanspruch 1, dadurch gekennzeichnet, daß zur Erleichterung des Anschmiegens des Trägerrahmens (6) an den Lastträger o.dgl. (1), bevor das Zusammenziehen und Verriegeln erfolgt, der Trägerrahmen hinten mit mindestens einer nach oben und unten verschiebbarer Stützrolle (18) versehen ist, die in nach unten verschobener Stellung arretierbar ist.

Fig.1

Fig.2

Fig.3

Fig. 4

*Fig.5*

Fig.6

**Fig.7**

Fig.8

6

20

19

21

18

0 062 020

Fig.9